# EUROPÄISCHE PATENTSCHRIFT

(11) **EP 3 759 889 B1**
(45) Veröffentlichungstag und Bekanntmachung des Hinweises auf die Patenterteilung: **02.11.2022**
(21) Anmeldenummer: 19705744.1
(22) Anmeldetag: 14.02.2019
(51) Int. Cl.: H04L 69/40

(54) **VERFAHREN ZUM ETABLIEREN EINER NETZWERKKOMMUNIKATION IN EINER ANLAGE DER AUTOMATISIERUNGSTECHNIK**
METHOD FOR ESTABLISHING A NETWORK COMMUNICATION IN AN AUTOMATION SYSTEM
PROCÉDÉ D'ÉTABLISSEMENT D'UNE COMMUNICATION RÉSEAU DANS UNE INSTALLATION DE LA TECHNIQUE D'AUTOMATISATION

(30) Priorität: 01.03.2018 DE 102018104698
(43) Veröffentlichungstag der Anmeldung: 06.01.2021
(73) Patentinhaber: Endress+Hauser Process Solutions AG, 4153 Reinach (CH)
(72) Erfinder: MAYER, Michael, 4104 Oberwil (CH); PÖSCHMANN, Axel, 4057 Basel (CH)
(74) Vertreter: Trenkle, Dennis
(86) Internationale Anmeldenummer: PCT/EP2019/053704
(87) Internationale Veröffentlichungsnummer: WO 2019/166233

(56) Entgegenhaltungen:
- EP-A1- 2 595 016
- DE-A1-102004 019 253
- DE-A1-102007 035 158
- DE-A1-102008 027 935
- DE-A1-102015 108 053

## Beschreibung

Die Erfindung betrifft ein Verfahren zum Etablieren einer Netzwerkkommunikation zwischen zumindest einem Netzwerkteilnehmer, welcher in einem ersten Kommunikationsnetzwerk eingesetzt ist, und einer Kommunikationsvorrichtung in einer Anlage der Automatisierungstechnik, wobei die Kommunikationsvorrichtung zumindest eine erste Kommunikationsschnittstelle zur Verbindung mit zumindest einem Netzwerkteilnehmer über das erste Kommunikationsnetzwerk aufweist, wobei ein Betriebssystem auf der Kommunikationsvorrichtung ausführbar ist und wobei eine erste Rahmenapplikation, insbesondere eine FDT-Rahmenapplikation, auf dem Betriebssystem lauffähig ist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind. EP2595016A1 offenbart eine automatische zyklische Überwachung einer Kommunikationsschnittstelle einer Recheneinheit. Wird ein Feldgerät an diese Kommunikationsschnittstelle angeschlossen, so wird dies automatisch festgestellt.

DE102008027935A1 offenbart eine Vorrichtung zur Integration von Geräteobjekten in eine übergeordnete Steuereinheit. Im Falle der Ankopplung einer Kommunikations-Hardware an eine Steuereinheit wird ein Treiber für die Kommunikations-Hardware installiert.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung,

Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Die Integration von Feldgeräten in solche Bedienprogramme erfolgt über Gerätetreiber, beziehungsweise über Gerätebeschreibungen. Diese werden von den Geräteherstellern bereitgestellt, damit die übergeordneten Einheiten, beziehungsweise die auf diesen übergeordneten Einheiten ablaufenden Bedienprogramme, die Bedeutung der von den Feldgeräten gelieferten Informationen erkennen und interpretieren können. Ein solches Bedienprogramm, in welches die Gerätebeschreibungen, bzw. Gerätetreiber geladen werden, wird auch als Rahmenapplikation bezeichnet.

Für eine vollumfängliche Bedienung der Feldgeräte sind spezielle Gerätetreiber, so genannte DTMs ("Device Type Manager"), die den FDT ("Field Device Tool") Spezifikationen entsprechen, erhältlich. Viele Feldgerätehersteller liefern für ihre Feldgeräte entsprechende DTMs aus. Die DTMs kapseln alle Variablen und Funktionen des jeweiligen Feldgeräts und bieten meist eine graphische Nutzeroberfläche zum Bedienen der Geräte innerhalb der Rahmenapplikation an.

Neben den übergeordneten Einheiten werden zur Bedienung der Feldgeräte häufig Bedieneinheiten in Form von Client-Rechnern eingesetzt, auf welchen eine entsprechende Rahmenapplikation abläuft. Diese Client-Rechner sind beispielsweise Laptops, aber auch mobile Endgeräte wie beispielsweise Tablet-PCs. Sie werden zur Kommunikation mit den Feldgeräten mit einer mit dem Feldbusnetzwerk verbundenen Feldbuszugriffseinheit verbunden. Auf der Feldbuszugriffseinheit wird ebenfalls eine Rahmenapplikation, insbesondere eine FDT-Rahmenapplikation, ausgeführt. Mithilfe eines speziellen Kommunikationstreibers, beispielsweise dem von der Anmelderin für die Rahmenapplikation "Fieldcare" angebotenen "YCommDTMs", ist es möglich, auf die Rahmenapplikation der Feldbuszugriffseinheit zuzugreifen und über diese Zugriff auf die Feldgeräte zu erlangen. Für den Client-Rechner ist die zwischen Feldgerät und Feldbuszugriffseinheit liegende Netzwerkinfrastruktur komplett transparent, da diese lediglich der Feldbuszugriffseinheit bekannt sein muss. Der Client-Rechner muss lediglich den DNS-Namen oder die Netzwerkadresse der Feldbuszugriffseinheit, sowie eine eindeutige Identifikationsinformation - beispielsweise den TAG - des Feldgerätes, auf welches er zugreifen möchte, kennen.

Zum Etablieren einer FDT-Rahmenapplikationslösung, beispielsweise zum Zugriff der FDT-Rahmenapplikation auf Feldgeräte, welche in einem dem Gerät, auf welchem die FDT-Rahmenapplikation integriert ist, untergeordneten Kommunikationsnetzwerk eingebunden sind, muss diese Lösung händisch und beaufsichtigt angelegt werden. Hierfür erzeugt ein Administrator ein Projekt auf der FDT-Rahmenapplikation, fügt Geräte ein, beispielsweise durch einen Scan des Kommunikationsnetzwerks, und speichert das Projekt. Falls das Projekt über einen längeren Zeitraum auf der FDT-Rahmenapplikation betrieben wird muss der Administrator in gewissen Zeitabständen prüfen, ob das Projekt noch wie vorgesehen arbeitet. Falls Probleme auftreten muss der Administrator eingreifen und beispielweise die FDT-Rahmenapplikation oder das Gerät neustarten, auf welcher die FDT-Rahmenapplikation abläuft. Dies stellt einen hohen zeitlichen und personellen Aufwand dar. Alle bisherigen bekannten FDT-Lösungen sind für eine solche direkte Benutzerinteraktion konzipiert.

Ausgehend von dieser Problematik liegt der Erfindung die Aufgabe zugrunde, ein Verfahren und eine Kommunikationsvorrichtung vorzustellen, welches es erlaubt, den Aufbau und die Instandhaltung einer Netzwerkkommunikation auf Basis einer FDT-Lösung zu erleichtern.

Die Aufgabe wird durch ein Verfahren zum Etablieren einer Netzwerkkommunikation zwischen zumindest einem Netzwerkteilnehmer, welcher in einem ersten Kommunikationsnetzwerk eingesetzt ist, und einer Kommunikationsvorrichtung in einer Anlage der Automatisierungstechnik gelöst, wobei die Kommunikationsvorrichtung zumindest eine erste Kommunikationsschnittstelle zur Verbindung mit zumindest einem Netzwerkteilnehmer über das erste Kommunikationsnetzwerk aufweist, wobei ein Betriebssystem auf der Kommunikationsvorrichtung ausführbar ist und wobei eine erste Rahmenapplikation, insbesondere eine FDT-Rahmenapplikation, auf dem Betriebssystem lauffähig ist, wobei die Kommunikationsvorrichtung die folgenden Verfahrensschritte ausführt:
- Rücksetzen des Betriebssystems anhand einer auf der Kommunikationsvorrichtung befindlichen Abbildungsdatei nach Einschalten oder Neustarten der Kommunikationsvorrichtung;
- Starten des Betriebssystems auf Basis der Abbildungsdatei; und
- Ausführen eines Skriptes, wodurch das Skript die folgenden Aktionen initiiert, bzw. steuert:
   I. Starten der ersten Rahmenapplikation;
   II. Einbinden zumindest einer Kommunikationsapplikation in die erste Rahmenapplikation; und
   III. Ausführen eines Scans des ersten Kommunikationsnetzwerks mittels der Kommunikationsapplikation und Ermitteln von Identifikationsinformationen aller im ersten Kommunikationsnetzwerk eingebundenen Netzwerkteilnehmer.

Der große Vorteil des erfindungsgemäßen Verfahrens besteht darin, dass mittels des erfindungsgemäßen Verfahrens ein vollständig automatischer Aufbau einer Netzwerkkommunikation zwischen der Kommunikationseinheit und einem oder mehreren Netzwerkteilnehmern möglich ist. Ein Bediener benötigt keinerlei Wissen darüber, wie ein Projekt auf der Rahmenapplikation aufzubauen ist - die Kommunikationsvorrichtung erstellt dieses selbstständig. Der Bediener muss lediglich das erste Kommunikationsnetzwerk an die erste Kommunikationsschnittstelle der Kommunikationsvorrichtung anschließen und die Kommunikationseinrichtung einschalten. Den weiteren Ablauf nimmt die Kommunikationsvorrichtung geskripted selbstständig vor.

Im Falle, dass ein Fehler auftritt, muss der Bediener lediglich die Kommunikationsvorrichtung neustarten. Die Kommunikationsvorrichtung setzt sich anschließend selbstständig neu auf und baut die Kommunikationsvorrichtung erneut auf.

Für den Bediener ist der Verfahrensablauf in der Kommunikationsvorrichtung nicht einsehbar und auch nicht notwendig. Es kann vorgesehen sein, dass die Kommunikationsvorrichtung bei erfolgreichem Aufbauen der Kommunikationsvorrichtung ein optisches Signal ausgibt, beispielsweise ein Blinken einer LED oder ein Aufleuchten einer LED in einer bestimmten Farbe. Bei einem Auftreten eines Fehlers kann ein dazu verschiedenes optisches Signal ausgegeben werden, beispielsweise ein verschiedener Blinkrhythmus oder ein Aufleuchten einer LED in einer anderen Farbe. Der Bediener wird hierdurch dazu angewiesen, die Kommunikationsvorrichtung neu zu starten.

Es kann vorgesehen sein, dass die Kommunikationsvorrichtung neben der der ersten Kommunikationsschnittstelle weitere Kommunikationsschnittstellen aufweist, an welchen weitere Netzwerkteilnehmer angeschlossen sind. Das Verfahren ist ebenso auf diese weiteren Kommunikationsschnittstellen anwendbar. In diesem Fall scannt die Kommunikationsvorrichtung nacheinander oder simultan alle an den Kommunikationsschnittstellen angeschlossenen Kommunikationsnetzwerke, um alle Netzwerkteilnehmer zu erfassen.

Im Folgenden wird das erfindungsgemäße Verfahren unter Benutzung der ersten Kommunikationsschnittstelle als alleinige Kommunikationsschnittstelle zum Anschluss von Netzwerkteilnehmern weitergehend beschrieben. Es sei angemerkt, dass alle weiteren Ausprägungen des Verfahrens mit einer Vielzahl weiterer Kommunikationsschnittstellen ausführbar sind.

Ein Beispiel für ein derartiges Betriebssystem ist Microsoft Windows. Es können jedoch auch weitere gängige Arten von Betriebssystemen (beispielsweise Linux, Apple OS X, etc.) oder Betriebssysteme mobiler Endgeräte (beispielsweise Apple iOS, Android, Microsoft Windows Mobile, etc.) verwendet werden.

Im Zusammenhang mit dem erfindungsgemäßen Verfahren wird unter einem "Netzwerkteilnehmer" beispielsweise ein Feldgerät der Automatisierungstechnik verstanden. Des Weiteren werden unter diesem Begriff weitere im ersten Kommunikationsnetzwerk befindliche Geräte, beispielsweise Gateways, Switches, Remote I/Os, Controller, etc. verstanden.

Feldgeräte, welche im Zusammenhang mit dem erfindungsgemäßen Verfahren genannt sind, sind bereits im einleitenden Teil der Beschreibung beispielhaft beschrieben worden.

Gemäß einer bevorzugten Ausgestaltung des erfindungsgemäßen Verfahrens ist vorgesehen, dass das Skript eine Zustandsüberwachung der ersten Rahmenapplikation initiiert, wobei die erste Rahmenapplikation im Rahmen der Zustandsüberwachung in regelmäßigen Abständen einen aktuellen Gerätestatus von jedem der Netzwerkteilnehmer abruft. Im Rahmen der Zustandsüberwachung (engl.: "condition monitoring") erfragt die Kommunikationsvorrichtung selbstständig den Gerätestatus der am ersten Kommunikationsnetzwerk angeschlossenen Netzwerkteilnehmer.

Gemäß einer vorteilhaften Weiterbildung des erfindungsgemäßen Verfahrens ist vorgesehen, dass eine Bedieneinheit mittels der ersten Kommunikationsschnittstelle oder mittels einer zweiten Kommunikationsschnittstelle der Kommunikationsvorrichtung über ein zweites Kommunikationsnetzwerk mit der Kommunikationsvorrichtung verbunden wird, wobei auf der Bedieneinheit eine zweite Rahmenapplikation ausgeführt wird. Beispielsweise kann die Bedieneinheit an das erste Kommunikationsnetzwerk angeschlossen werden, in dem Falle, dass eine Kommunikation mit der Kommunikationsvorrichtung über die erste Kommunikationsschnittstelle vorgesehen ist.

Gemäß einer bevorzugten Ausgestaltung des erfindungsgemäßen Verfahrens ist vorgesehen, dass die zweite Rahmenapplikation über die Kommunikationsanwendung der ersten Rahmenapplikation mit dem zumindest einen Netzwerkteilnehmer verbunden wird. In der zweiten Rahmenapplikation ist hierfür ein Gerätetreiber eingebunden. Bei diesem handelt es sich beispielsweise um einen sogenannten "YCommDTM". Die genaue Funktionsweise dieses Verfahrens, bei dem die Bedieneinheit als Client-Rechner auf die erste Rahmenapplikation der Kommunikationsvorrichtung dient, ist bereits im einleitenden Teil der Beschreibung aufgeführt.

Gemäß einer vorteilhaften Ausgestaltung des erfindungsgemäßen Verfahrens ist vorgesehen, dass die Bedieneinheit den ersten Netzwerkteilnehmer bedient, insbesondere parametriert. Im Zuge einer Parametrierung werden Parametern des Netzwerkteilnehmers, welche seine Funktion definieren/bestimmen, Parameterwerte zugewiesen. Des Weiteren wird unter dem Begriff "Bedienen" beispielsweise ein Abfragen von Messwerten, Diagnosedaten, dem Gerätestatus, etc. des Netzwerkteilnehmers verstanden.

Gemäß einer bevorzugten Ausgestaltung des erfindungsgemäßen Verfahrens ist vorgesehen, dass als Bedieneinheit ein mobiles Endgerät verwendet wird. Bei einem mobilen Endgerät handelt es sich beispielsweise um ein Smartphone oder einen Tablet-PC. Alternativ kann auch eine Bedieneinheit im Sinne des von der Anmelderin hergestellten und vertriebenen "Field Xperts" verwendet werden.

Im erfindungsgemäßen Verfahrens ist vorgesehen, dass auf dem Betriebssystem der Kommunikationseinheit eine Überwachungsapplikation ausgeführt wird.

Gemäß des erfindungsgemäßen Verfahrens ist vorgesehen, dass die Überwachungsapplikation das Betriebssystem und/oder die Hardware der Kommunikationsbox auf Fehler überprüft und wobei im Falle eines detektierten Fehlers die Kommunikationseinheit neu gestartet wird. Die Überwachungsapplikation überprüft beispielsweise betriebssystemseitig, ob Tasks des Betriebssystems verlangsamt ablaufen oder angehalten sind. Des Weiteren überprüft die Überwachungsapplikation hardwareseitig, ob Gerätekomponenten außer Betrieb sind oder deren Funktion beeinträchtigt ist. Durch den Neustart der Kommunikationsvorrichtung wird das Betriebssystem neu aufgesetzt und die Netzwerkkommunikation der Kommunikationsvorrichtung neu aufgebaut. Fehler, die im laufenden Betrieb aufgetreten sind, werden dadurch behoben.

Gemäß des erfindungsgemäßen Verfahrens ist vorgesehen, dass die Überwachungsapplikation die Rahmenapplikation auf Fehler überprüft und wobei im Falle eines detektieren Fehlers die erste Rahmenapplikation beendet und neugestartet wird. Auch hier wird überprüft, ob bestimmte Tasks der Rahmenapplikation verlangsamt ablaufen oder angehalten sind.

Es kann auch geprüft werden, ob noch Daten über die Ports eingehen, bzw. ausgehen. Wird kein, oder nur ein geringer, Datenverkehr detektiert, so kann dies auf ein Netzwerkkonfigurationsproblem der Kommunikationseinheit hinweisen.

Gemäß einer bevorzugten Ausgestaltung des erfindungsgemäßen Verfahrens ist vorgesehen, dass die Überwachungsapplikation die Rahmenapplikation in regelmäßigen Zeitabständen beendet und neustartet. Hierdurch wird Fehlern vorgebeugt, die sich über einen längeren Betriebszeitraum entwickeln können.

In einer vorteilhaften Weiterbildung des erfindungsgemäßen Verfahrens ist vorgesehen, dass die nach dem Scan des ersten Kommunikationsnetzwerks ermittelten Netzwerkteilnehmer als Projektdatei gespeichert werden. In der Projektdatei sind beispielsweise die Namen der Netzwerkteilnehmer, deren jeweilige Netzwerkadresse und/oder die Baumstruktur des ersten Kommunikationsnetzwerks

Gemäß einer bevorzugten Ausgestaltung des erfindungsgemäßen Verfahrens ist vorgesehen, dass das Skript nach dem Starten der ersten Rahmenapplikation die gespeicherte Projektdatei in die Rahmenapplikation lädt. Auf diese Art und Weise muss die Netzwerkkommunikation nicht gänzlich neu aufgebaut werden, wodurch die Kommunikationsvorrichtung schneller in Betrieb genommen kann, als auf herkömmlichen Wege.

Gemäß einer vorteilhaften Ausgestaltung des erfindungsgemäßen Verfahrens ist vorgesehen, dass das Skript nach dem Starten der Rahmenapplikation eine auf der Kommunikationseinrichtung gespeicherte Konfigurationsdatei ausliest und die ausgelesenen Daten der Rahmenapplikation zum Ausführen des Scans übergibt. In der Konfigurationsdatei sind Daten enthalten, welche an die Rahmenapplikation übergeben werden und welche von der Rahmenapplikation dazu verwendet werden, die Netzwerkkommunikation zu konfigurieren. Beispielsweise handelt es sich bei den Daten um eine zu verwendende Netzwerkadresse der Kommunikationseinheit.

In einer bevorzugten Weiterbildung des erfindungsgemäßen Verfahrens ist vorgesehen, dass das Betriebssystem nach dem Neustarten der Kommunikationsvorrichtung nur dann zurückgesetzt wird, wenn sich ein Schaltmittel der Kommunikationsvorrichtung mit zumindest zwei möglichen Zuständen in einem ersten Zustand befindet.

Gemäß einer bevorzugten Ausgestaltung des erfindungsgemäßen Verfahrens ist vorgesehen, dass das Betriebssystem nach dem Neustarten nicht neu gestartet wird, wenn sich das Schaltmittel der Kommunikationsvorrichtung in einem zweiten Zustand befindet, wobei in diesem Fall das Skript nach dem Starten der ersten Rahmenapplikation die gespeicherte Projektdatei in die Rahmenapplikation lädt.

Mittels des Schaltmittels, bei dem es sich beispielsweise um einen Schalter oder eine Taste handelt, welcher am Gehäuse der Kommunikationsvorrichtung angebracht ist, ist ein effizientes Instandsetzen der Kommunikationseinheit möglich. Beispielsweise kann vorgesehen sein, dass sich das Schaltmittel standardmäßig im zweiten Zustand befindet. In diesem Fall wird das Betriebssystem lediglich neu gestartet und nicht neu aufgesetzt. Beim Starten der Rahmenapplikation durch das Skript wird die Projektdatei geladen, wodurch das Kommunikationsnetzwerk nicht erneut gescannt werden muss. Diese Variante ist für Fehler zu empfehlen, welche durch einen längeren Betrieb der Kommunikationseinrichtung am Stück auftreten und die durch einen einfachen Neustart der Kommunikationsvorrichtung, bei welchem unter anderem der Arbeitsspeicher der Kommunikationsvorrichtung gelöscht wird, zu empfehlen.

Bei systematischen Fehlern, welche nicht durch ein einfaches Neustarten der Kommunikationsvorrichtung zu beheben sind, betätigt der Bediener das Schaltmittel derart, dass es in den zweiten Zustand wechselt. In diesem wird das Betriebssystem neu aufgesetzt und die Netzwerkkommunikation komplett neu aufgebaut.

Des Weiteren wird die Aufgabe durch eine Kommunikationsvorrichtung, umfassend zumindest eine erste Kommunikationsschnittstelle, welche zur Kommunikation mit zumindest einem Netzwerkteilnehmer ausgestaltet ist, gelöst, wobei die Kommunikationsvorrichtung dazu ausgestaltet ist, das erfindungsgemäße Verfahren durchzuführen.

Bei der Kommunikationsvorrichtung handelt es sich beispielsweise um einen Industrie-PC. Dieser ist vorkonfiguriert, so dass es üblicherweise nicht vorgesehen ist, dass ein Bediener Konfigurationseinstellungen der Konfigurationsvorrichtung ändert. Ist dies jedoch gewünscht, so kann die Konfigurationsvorrichtung Bedienschnittstellen aufweisen, zum Anschluss einer Anzeigeeinheit, wie beispielsweise eines Monitors, und zum Anschluss zumindest eines Eingabemittels, beispielsweise einer Tastatur.

Gemäß einer bevorzugten Ausgestaltung der erfindungsgemäßen Kommunikationsvorrichtung ist vorgesehen, dass die erste Kommunikationsschnittstelle zur Verbindung mit einem ersten drahtgebundenen Kommunikationsnetzwerk, insbesondere einem Feldbus der Automatisierungstechnik, ausgestaltet ist. In diesem Fall handelt es sich bei dem ersten Kommunikationsnetzwerk beispielsweise um einen Feldbus der Automatisierungstechnik, beispielsweise PROFIBUS, Foundation Fieldbus, HART, etc., um einen Ethernet-Feldbus, beispielsweise PROFINET oder um ein IT-Kommunikationsnetzwerk.

Gemäß einer vorteilhaften Ausgestaltung der erfindungsgemäßen Kommunikationsvorrichtung ist vorgesehen, dass die Kommunikationsvorrichtung eine zweite Kommunikationsschnittstelle aufweist, welche zur Verbindung mit einem zweiten, insbesondere drahtgebundenen oder drahtlosen, Kommunikationsnetzwerk ausgestaltet ist. Das drahtlose Kommunikationsnetzwerk verwendet als Protokoll beispielsweise Wi-Fi, Bluetooth (LE), Zigbee, etc. Es kann sich aber auch um ein Kommunikationsnetzwerk handeln, welches ein Mobilfunknetz verwendet, beispielsweise GPRS, EDGE, LTE, 4G, 5G, etc.

Gemäß einer bevorzugten Ausgestaltung der erfindungsgemäßen Kommunikationsvorrichtung ist vorgesehen, dass die Kommunikationsvorrichtung eine dritte Kommunikationsschnittstelle aufweist, welche dritte Kommunikationsschnittstelle zur Verbindung mit einem dritten, insbesondere drahtgebundenen oder drahtlosen Kommunikationsnetzwerk ausgestaltet ist.

Gemäß einer vorteilhaften Ausgestaltung der erfindungsgemäßen Kommunikationsvorrichtung ist vorgesehen, dass die Kommunikationsvorrichtung mittels der ersten Kommunikationsschnittstelle oder mittels der dritten Kommunikationsschnittstelle mit einem weiteren Netzwerkteilnehmer verbindbar ist, wobei die Kommunikationsvorrichtung derart ausgestaltet ist, Bedienbefehle des weiteren Netzwerkteilnehmers auszuführen und/oder dem weiteren Netzwerkteilnehmer Informationen zu übermitteln. Das erfindungsgemäße Verfahren, welches eine Netzwerkkommunikation mit einem Netzwerkteilnehmer über das erste Kommunikationsnetzwerk beschreibt, kann auf ein weiteres drittes Kommunikationsnetzwerk erweitert werden.

An der Kommunikationsvorrichtung können noch eine Vielzahl weiterer Kommunikationsschnittstellen vorgesehen sein, an welchem weitere Netzwerkteilnehmer über weitere drahtgebundene oder drahtlose Kommunikationsnetzwerke verbunden sind. Das erfindungsgemäße Verfahren ist nicht auf eine Höchstzahl von Kommunikationsschnittstellen und Netzwerkteilnehmern beschränkt.

Es kann vorgesehen sein, dass die Bedieneinheit und der Netzwerkteilnehmer im selben Kommunikationsnetzwerk integriert sind.

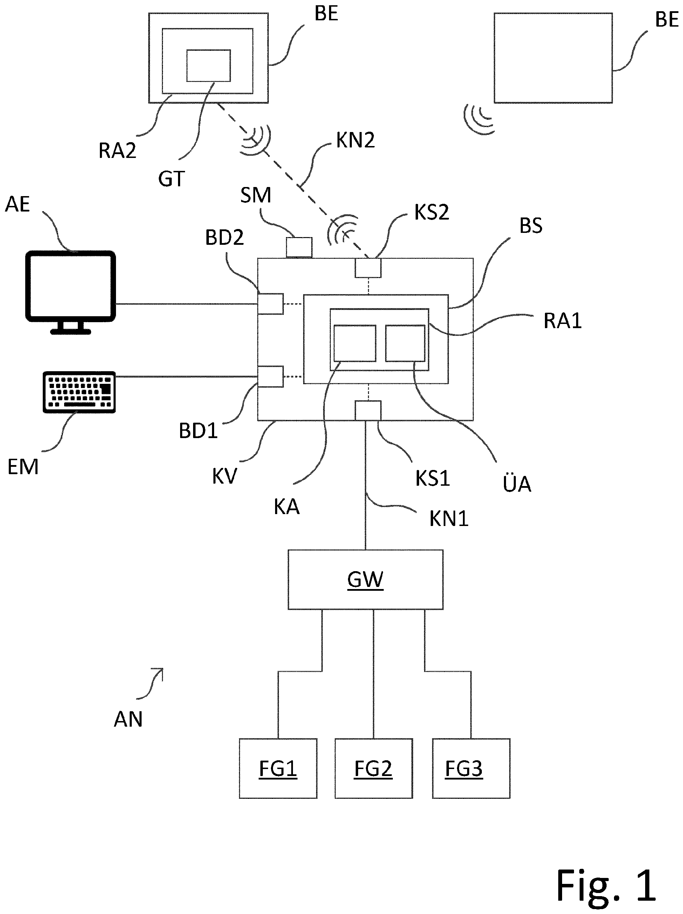

Die Erfindung wird anhand der nachfolgenden Figuren näher erläutert. Es zeigt
Fig. 1: ein Ausführungsbeispiel der erfindungsgemäßen Kommunikationsvorrichtung.

In Fig. 1 ist ein Teilabschnitt einer Anlage AN der Automatisierungstechnik abgebildet. In der Anlage AN sind eine Vielzahl von Feldgeräten FG1, FG2, FG3 eingebunden. Diese dienen zum Erfassen und/oder Beeinflussen von Prozessvariablen an prozesstechnischen Messstellen der Anlage AN. Beispiele für solche Feldgeräte FG1, FG2, FG3 sind bereits im einleitenden Teil der Beschreibung beispielhaft genannt worden.

Im Zuge der Inbetriebnahme der Feldgeräte FG1, FG2, FG3 und im Zuge des allgemeinen Betriebs der Feldgeräte FG1, FG2, FG3 erheben diese Daten und übermitteln diese Daten, insbesondere in regelmäßigen Zeitabständen, beispielsweise an eine Leitstelle der Anlage AN. Ebenso empfangen die Feldgeräte FG1, FG2, FG3 regelmäßig Daten. Zu diesem Zweck sind die Feldgeräte FG1, FG2, FG3 in einem ersten Kommunikationsnetzwerk KN1 eingebunden. Das erste Kommunikationsnetzwerk KN1 kann aus mehreren Teilsegmenten bestehen. Im vorliegenden, in Fig. 1 gezeigten, Ausführungsbeispiel handelt es sich bei dem Teilsegment des ersten Kommunikationsnetzwerks KN1, in welches die Feldgeräte FG1, FG2, FG3 unmittelbar eingebunden sind, um einen Feldbus der Automatisierungstechnik, beispielsweise Profibus PA oder Foundation Fieldbus. Die Feldgeräte sind somit Netzwerkteilnehmer des ersten Kommunikationsnetzwerks KN1.

Ein Weiterer Netzwerkteilnehmer ist in diesem Ausführungsbeispiel ein Gateway GW. Dieses verbindet mehrere Teilsegmente des ersten Kommunikationsnetzwerks KN1 und erlaubt auch ein Zusammenführen von Teilsegmenten, welche zueinander verschiedene Netzwerktypen darstellen.

Um mit den Feldgeräten FG1, FG2, FG3 kommunizieren zu können, wird üblicherweise eine FDT-Rahmenapplikation verwendet, welche auf einem Gerät abläuft, welches mit dem ersten Kommunikationsnetzwerk KN1 verbunden ist. Das Etablieren einer solchen Netzwerkkommunikation ist häufig ein zeitaufwendiger Vorgang. Ein Bediener muss mit der FDT/DTM-Technologie gut vertraut sein, um ein FDT-Projekt zum Etablieren einer Netzwerkkommunikation zwischen dem Gerät und den Feldgeräten FG1, FG2, FG3 zu erstellen.

Mittels der erfindungsgemäßen Kommunikationsvorrichtung KV wird der Benutzer bei dem Aufbau und der Instandhaltung der Netzwerkkommunikation unterstützt. Bei der Kommunikationsvorrichtung KV handelt es sich beispielweise um einen Industrie-PC. Die Kommunikationsvorrichtung KV ist ab Werk für den Bediener vorkonfiguriert. Die Kommunikationsvorrichtung KV weist eine erste Kommunikationsschnittstelle KS1 auf, mittels welcher die Kommunikationsvorrichtung KV mit dem ersten Kommunikationsnetzwerk KN1 verbunden wird.

Nach dem Verbinden startet der Bediener die Kommunikationsvorrichtung KV. Hierbei ist zu beachten, dass sich ein Schaltmittel SM an dem Gehäuse der Kommunikationsvorrichtung KV befindet. Standardmäßig befindet sich das Schaltmittel SM in einem ersten Zustand. Im ersten Zustand wird bei einem Start der Kommunikationsvorrichtung eine Image-Datei geladen. Diese enthält ein Abbild eines Betriebssystems BS. Bei dem Betriebssystem handelt es sich beispielsweise um Microsoft Windows. Mittels der Image-Datei wird bei einem Start der Kommunikationsvorrichtung KV die bisher auf der Kommunikationsvorrichtung KV befindliche Version des Betriebssystems BS, samt allen dazu gehörigen Programmen und Daten, überschrieben.

Nach dem sogenannten Neuaufsetzen des Betriebssystems BS wird dieses gestartet. Unmittelbar nach dem Start der Kommunikationsvorrichtung KV wird ein Skript gestartet. Mittels eines solchen Skripts sind automatisierte Starts von Programmen und Parameterübergaben an die Programme möglich. Als ersten Schritt öffnet das Skript eine erste FDT-Rahmenapplikation RA1, beispielsweise Fieldcare, welches von der Anmelderin vertrieben wird. Die erste Rahmenapplikation RA wird ebenfalls mittels der Image-Datei auf dem Betriebssystem BS installiert.

In einem zweiten Verfahrensschritt liest das Skript eine auf der Kommunikationsvorrichtung KV befindliche Konfigurationsdatei. Diese enthält Parameter, welche die Kommunikationsvorrichtung KV, bzw. die erste Rahmenapplikation RA1 für ein Verbinden mit dem ersten Kommunikationsnetzwerk KN1 benötigt, beispielsweise eine Netzwerkadresse für die Kommunikationsvorrichtung. Die ausgelesenen Parameter werden anschließend an das Betriebssystem BS, bzw. an die erste Rahmenapplikation übergeben.

In einem dritten Verfahrensschritt initiiert das Skript das Einbinden einer Kommunikationsapplikation KA in die Kommunikationsvorrichtung KV. Die Kommunikationsapplikation detektiert das erste Kommunikationsnetzwerk KN1 und führt einen automatisierten Scan des ersten Kommunikationsnetzwerks KN1 durch. Hierbei werden alle Netzwerkteilnehmer - in diesem Fall die Feldgeräte FG1, FG2, FG3 und das Gateway GW -des ersten Kommunikationsnetzwerks KN1, deren Netzwerkadressen und deren Typ und Identifikationsinformationen ermittelt. Bei der Kommunikationsapplikation KA handelt es sich insbesondere um einen Kommunikations-DTM ("CommDTM"), welcher einen speziellen Treiber für die Kommunikation über den spezifischen Typ des ersten Kommunikationsnetzwerks KN1 darstellt.

In einem vierten Verfahrensschritt initiiert das Skript das Speichern einer Projektdatei der ersten Rahmenapplikation RA. In dieser ist die im dritten Verfahrensschritt ermittelte Netzwerkstruktur des ersten Kommunikationsnetzwerks KN1 enthalten.

In einem optionalen fünften Verfahrensschritt initiiert das Skript das Starten einer Zustandsüberwachung (engl.: "condition monitoring") in der ersten Rahmenapplikation RA. Die Zustandsüberwachung erfragt in regelmäßigen Zeitabständen den Gerätestatus aller Netzwerkteilnehmer.

Zeitgleich zum Starten der ersten Rahmenapplikation RA1 wird auf dem Betriebssystem BS mittels des Skripts eine Überwachungsapplikation
ÜA gestartet. Diese überwacht die korrekte Funktion der Hardwarebestandteile der Kommunikationsvorrichtung KV, die korrekte Funktion des Betriebssystems BS sowie die korrekte Funktion der ersten Rahmenapplikation RA1. Wird ein Fehler der Hardwarekomponenten oder des Betriebssystems BS bemerkt, so startet die Überwachungsapplikation ÜA die Kommunikationsvorrichtung KV neu. Bei einem Fehler der ersten Rahmenapplikation RA wird diese geschlossen und erneut geöffnet, ohne dass die gesamte Kommunikationsvorrichtung KV neu gestartet wird. Beim erneuten Starten der ersten Rahmenapplikation RA1 wird die gespeicherte Projektdatei geladen, ohne dass ein erneuter Scan des ersten Kommunikationsnetzwerks KN1 vorgenommen werden muss. Es kann jedoch vorgesehen sein, dass bei mehrmaligen Neustarten ein neues Projekt gestartet wird und das erste Kommunikationsnetzwerk KN1 erneut gescannt wird.

Bei einem Neustart der Kommunikationsvorrichtung KV oder einem generellen Anschalten der Kommunikationsvorrichtung KV kann es vorgesehen sein, dass das Betriebssystem nicht neu aufgesetzt wird. Tritt beispielsweise ein von der Überwachungsapplikation ÜA detektierter Hardwarefehler oder ein Fehler des Betriebssystems BS auf, der durch einen Neustart behoben werden kann, so muss das Betriebssystem BS nicht neu aufgesetzt werden. Zu diesem Zweck wird das Schaltmittel SM betätigt, so dass sich diesen in einem zweiten Zustand befindet. Im zweiten Zustand wird das Betriebssystem BS im Zuge eines (Neu)starts der Kommunikationsvorrichtung KV normal gestartet und anschließend das Skript ausgeführt. Das Skript initiiert anschließend das Starten der ersten Rahmenapplikation RA1 und der Überwachungsapplikation ÜA, sowie das Laden der Projektdatei in die erste Rahmenapplikation.

Die erfindungsgemäße Kommunikationsvorrichtung KV bietet dem Bediener erhebliche Vorteile: Er muss lediglich das erste Kommunikationsnetzwerk KN1 mit der Kommunikationsvorrichtung KV verbinden, die Kommunikationsvorrichtung KV starten, sowie auf den korrekten Zustand des Schaltmittels SM achten. Das nachfolgende Erstellen des FDT-Projekts, also das Etablieren der Netzwerkkommunikation sowie das Starten der Zustandsüberwachung, und die Überwachung der korrekten Funktion der Kommunikationsvorrichtung KV läuft für den Bediener vollkommen unbemerkt ab - die Kommunikationsvorrichtung KV arbeitet sozusagen als sogenannte "Blackbox". Der Bediener muss über keinerlei Kenntnisse über die FDT-Technologie verfügen. Möchte der Bediener dennoch Einstellungen an der Konfiguration der Kommunikationsvorrichtung KV vornehmen, so kann er eine Anzeigeeinheit AE und/oder Bedienmittel BM über an der Kommunikationsvorrichtung befindliche Bedienschnittstellen BS verbinden.

Um mit den Netzwerkteilnehmern des ersten Kommunikationsnetzwerks KN1 kommunizieren zu können verbindet der Bediener eine Bedieneinheit BE mit der Kommunikationsvorrichtung KV. Im vorliegenden Beispiel weist die Kommunikationsvorrichtung KV hierfür eine zweite Kommunikationsschnittstelle KS2 auf, in diesem Fall eine drahtlose Schnittstelle basierend auf Wifi oder eine drahtgebundene Schnittstelle basierend auf Ethernet. Die Bedieneinheit BE, bei der es sich in diesem Fall um einen Tablet-PC handelt, weist eine zweite Rahmenapplikation RA2 auf, in welcher zumindest ein Gerätetreiber GT eingebunden ist. Der Gerätetreiber GT, bei welchem es sich im vorliegenden Fall um einen Gerätetreiber für ein Feldgerät handelt, ist dazu eingerichtet über einen Kommunikations-DTM ("YCommDTM") der zweiten Rahmenapplikation RA2 auf die erste Rahmenapplikation RA zugreifen zu können, um diese für eine Kommunikation mit einem oder mehreren der Netzwerkteilnehmer zu nutzen. Im Detail handelt es sich bei dem Gerätetreiber GT beispielsweise um einen Treiber für einen Temperatursensor. Damit dieser Gerätetreiber mit der ersten Rahmenapplikation RA 1 über das zweite Kommunikationsnetzwerk in Kommunikationsverbindung gerät, wird der Kommunikations-DTM auf der Seite der Bedieneinheit BE zwischengeschaltet. Dieser leitet die Kommunikation des Gerätetreibers GT an die erste Rahmenapplikation RA1 weiter. Von dort aus wird die Kommunikation an den korrespondierenden Netzwerkteilnehmer, in diesem Fall ein Feldgerät FG2 in Gestalt eines Temperatursensors, übermittelt. Die Antwort dieses Netzwerkteilnehmers wird über diesen Kommunikationsweg in entgegengesetzter Richtung an den Gerätetreiber GT übermittelt.

Die Netzwerkteilnehmer können auf diese Weise von der Bedieneinheit BE bedient werden. Unter dem Begriff "Bedienen" wird beispielsweise ein Abfragen von Messwerten, Diagnosedaten, dem Gerätestatus, etc. eines Netzwerkteilnehmers, bzw. ein Parametrieren des Netzwerkteilnehmers, verstanden.

Die vorliegende Erfindung ist nicht auf das in Fig. 1 gezeigt Ausführungsbeispiel beschränkt. Es können an der Kommunikationsvorrichtung KV eine Vielzahl weiterer Kommunikationsschnittstellen zum Anschluss an eine Vielzahl weiterer Kommunikationsnetzwerke vorgesehen sein. Diese können ebenfalls wie beschrieben gescannt und deren Netzwerkteilnehmer ermittelt werden, zum Zweck, ebenfalls den Zustand dieser Netzwerkteilnehmer zu überwachen und diese Netzwerkteilnehmer zu bedienen. Ebenso kann es vorgesehen sein, dass die Bedieneinheit BE mit dem ersten Kommunikationsnetzwerk KN1 verbunden wird und ebenfalls über die erste Kommunikationsschnittstelle KS1 mit der Kommunikationsvorrichtung, bzw, mit den Netzwerkteilnehmern kommuniziert.

### Bezugszeichenliste

- AE: Anzeigeeinheit
- AN: Anlage
- BE: Bedieneinheit
- BD1: erste Bedienschnittstelle
- BD2: zweite Bedienschnittstelle
- BS: Betriebssystem
- EM: Eingabemittel
- FG1, FG2, FG3: Feldgeräte, Netzwerkteilnehmer
- GT: Gerätetreiber
- GW: Gateway, Netzwerkteilnehmer
- KA: Kommunikationsapplikation
- KS1: erste Kommunikationsschnittstelle
- KS2: zweite Kommunikationsschnittstelle
- KN1: erstes Kommunikationsnetzwerk
- KN2: zweites Kommunikationsnetzwerk
- KV: Kommunikationsvorrichtung
- RA1: erste Rahmenapplikation
- RA2: zweite Rahmenapplikation
- SM: Schaltmittel
- ÜA: Überwachungsapplikation

## Patentansprüche

1. Verfahren zum Etablieren einer Netzwerkkommunikation zwischen zumindest einem Netzwerkteilnehmer (FG1, FG2, FG3, GW), welcher in einem ersten Kommunikationsnetzwerk (KN1) eingesetzt ist, und einer Kommunikationsvorrichtung (KV) in einer Anlage (AN) der Automatisierungstechnik, wobei die Kommunikationsvorrichtung (KV) zumindest eine erste Kommunikationsschnittstelle (KS1) zur Verbindung mit dem zumindest einen Netzwerkteilnehmer (FG1, FG2, FG3, GW) über das erste Kommunikationsnetzwerk (KN1) aufweist, wobei ein Betriebssystem (BS) auf der Kommunikationsvorrichtung (KV) ausführbar ist, wobei eine erste Rahmenapplikation (RA1), insbesondere eine FDT-Rahmenapplikation, auf dem Betriebssystem (BS) lauffähig ist, und wobei auf dem Betriebssystem (BS) der Kommunikationsvorrichtung (KV) eine Überwachungsapplikation (ÜA) ausführbar ist, wobei die Kommunikationsvorrichtung (KV) die folgenden Verfahrensschritte ausführt:
- Rücksetzen des Betriebssystems (BS) anhand einer auf der Kommunikationsvorrichtung (KV) befindlichen Abbildungsdatei nach Einschalten oder Neustarten der Kommunikationsvorrichtung (KV);
- Starten des Betriebssystems (BS) auf Basis der Abbildungsdatei;
- Ausführen eines Skriptes, wodurch das Skript die folgenden Aktionen initiiert, bzw. steuert:
I. Starten der ersten Rahmenapplikation (RA1) und der Überwachungsapplikation (ÜA);
II. Einbinden zumindest einer Kommunikationsapplikation (KA) in die erste Rahmenapplikation (RA1); und
III. Ausführen eines Scans des ersten Kommunikationsnetzwerks (KN1) mittels der Kommunikationsapplikation (KA) und Ermitteln von Identifikationsinformationen aller im ersten Kommunikationsnetzwerk (KN1) eingebundenen Netzwerkteilnehmer (FG1, FG2, FG3, GW),
- Überprüfen des Betriebssystems (BS), der Hardware der Kommunikationsvorrichtung (KV) und der ersten Rahmenapplikation (RA1) auf Fehler mittels der Überwachungsapplikation (ÜA); und
- Neustarten der Kommunikationsvorrichtung (KV) im Falle eines detektierten Fehlers an der Hardware oder des Betriebssystems (BS), oder Beenden und Neustarten der ersten Rahmenapplikation (RA1) im Falle eines detektierten Fehlers der ersten Rahmenapplikation (RA1).

2. Verfahren nach Anspruch 1, wobei das Skript eine Zustandsüberwachung der ersten Rahmenapplikation (RA1) initiiert, wobei die erste Rahmenapplikation (RA1) im Rahmen der Zustandsüberwachung in regelmäßigen Abständen einen aktuellen Gerätestatus von jedem der Netzwerkteilnehmer (FG1, FG2, FG3, GW) abruft,
und/oder wobei das Skript nach dem Starten der ersten Rahmenapplikation (RA1) eine auf der Kommunikationsvorrichtung (KV) gespeicherte Konfigurationsdatei ausliest und die ausgelesenen Daten der ersten Rahmenapplikation (RA1) zum Ausführen des Scans übergibt.

3. Verfahren nach Anspruch 1 oder 2, wobei eine Bedieneinheit (BE) mittels einer zweiten Kommunikationsschnittstelle (KS2) der Kommunikationsvorrichtung (KV) über ein zweites Kommunikationsnetzwerk (KN2) oder mittels der ersten Kommunikationsschnittstelle (KS1) mit der Kommunikationsvorrichtung (KV) verbunden wird, wobei auf der Bedieneinheit (BE) eine zweite Rahmenapplikation (RA2) ausgeführt wird.

4. Verfahren nach Anspruch 3, wobei die zweite Rahmenapplikation (RA2) über die Kommunikationsanwendung der ersten Rahmenapplikation (RA1) mit dem zumindest einen Netzwerkteilnehmer (FG1, FG2, FG3, GW) verbunden wird.

5. Verfahren nach Anspruch 4, wobei die Bedieneinheit (BE) den ersten Netzwerkteilnehmer (FG1, FG2, FG3, GW) bedient, insbesondere parametriert.

6. Verfahren nach zumindest einem der Ansprüche 3 bis 5, wobei als Bedieneinheit (BE) ein mobiles Endgerät verwendet wird.

7. Verfahren nach Anspruch 1, wobei die Überwachungsapplikation (ÜA) die erste Rahmenapplikation (RA1) in regelmäßigen Zeitabständen beendet und neustartet.

8. Verfahren nach zumindest einem der vorherigen Ansprüche, wobei die nach dem Scan des ersten Kommunikationsnetzwerks (KN1) ermittelten Netzwerkteilnehmer (FG1, FG2, FG3, GW) als Projektdatei gespeichert werden.

9. Verfahren nach Anspruch 8, wobei das Skript nach dem Starten der ersten Rahmenapplikation (RA1) die gespeicherte Projektdatei in die erste Rahmenapplikation (RA1) lädt.

10. Verfahren nach zumindest einem der vorherigen Ansprüche, wobei das Betriebssystem (BS) nach dem Einschalten oder dem Neustarten der Kommunikationsvorrichtung (KV) nur dann zurückgesetzt wird, wenn sich ein Schaltmittel (SM) der Kommunikationsvorrichtung (KV) mit zumindest zwei möglichen Zuständen in einem ersten Zustand befindet.

11. Verfahren nach Anspruch 10, wobei das Betriebssystem (BS) nach dem Neustarten nicht zurückgesetzt wird, wenn sich das Schaltmittel (SM) der Kommunikationsvorrichtung (KV) in einem zweiten Zustand befindet, wobei in diesem Fall das Skript nach dem Starten der ersten Rahmenapplikation (RA1) die gespeicherte Projektdatei in die erste Rahmenapplikation (RA1) lädt.

12. Kommunikationsvorrichtung (KV), umfassend
zumindest eine erste Kommunikationsschnittstelle (KS1), welche zur Kommunikation mit zumindest einem Netzwerkteilnehmer (FG1, FG2, FG3, GW) ausgestaltet ist,
wobei die Kommunikationsvorrichtung (KV) dazu ausgestaltet ist, das Verfahren nach einem der Ansprüche 1 bis 11 durchzuführen.

13. Kommunikationsvorrichtung (KV) nach Anspruch 12, wobei die erste
Kommunikationsschnittstelle (KS1) zur Verbindung mit einem ersten drahtgebundenen Kommunikationsnetzwerk (KN1), insbesondere einem Feldbus der Automatisierungstechnik, ausgestaltet ist,
und/oder wobei die Kommunikationsvorrichtung (KV) eine zweite Kommunikationsschnittstelle (KS2) aufweist, welche zur Verbindung mit einem zweiten, insbesondere drahtgebundenen oder drahtlosen, Kommunikationsnetzwerk (KN2) ausgestaltet ist,
und/oder wobei die Kommunikationsvorrichtung (KV) eine dritte Kommunikationsschnittstelle aufweist, welche dritte Kommunikationsschnittstelle zur Verbindung mit einem dritten, insbesondere drahtgebundenen oder drahtlosen Kommunikationsnetzwerk ausgestaltet ist,
und/oder wobei die Kommunikationsvorrichtung (KV) mittels der ersten Kommunikationsschnittstelle (KS1) oder mittels der dritten Kommunikationsschnittstelle mit einem weiteren Netzwerkteilnehmer (FG1, FG2, FG3, GW) verbindbar ist, wobei die Kommunikationsvorrichtung (KV) derart ausgestaltet ist, Bedienbefehle des weiteren Netzwerkteilnehmers (FG1, FG2, FG3, GW) auszuführen und/oder dem weiteren Netzwerkteilnehmer (FG1, FG2, FG3, GW) Informationen zu übermitteln.

## Claims

1. Procedure designed to establish network communication between at least one network user (FG1, FG2, FG3, GW), which is deployed in a first communication network (KN1), and a communication device (KV) in a system (AN) used in automation engineering, wherein the communication device (KV) has at least a first communication interface (KS1) to connect with the at least one network user (FG1, FG2, FG3, GW) via the first communication network (KN1), wherein an operating system (BS) can be run on the communication device (KV),
wherein a first frame application (RA1), particularly an FDT frame application, can be executed on the operating system (BS), and wherein a monitoring application (ÜA) can be executed on the operating system (BS) of the communication device (KV), wherein the communication device (KV) performs the following procedural steps:
- Resetting of the operating system (BS) on the basis of a mapping file located on the communication device (KV) after switching on or restarting the communication device (KV);
- Starting the operating system (BS) on the basis of the mapping file;
- Execution of a script, wherein the script initiates or controls the following actions:
I. Starting of the first frame application (RA1) and the monitoring application (UA);
II. Integration of at least one communication application (KA) into the first frame application (RA1); and
III. Execution of a scan of the first communication network (KN1) using the communication application (KA) and determination of identification information of all the network users (FG1, FG2, FG3, GW) integrated in the first communication network (KN1),
- Checking of the operating system (BS), the hardware of the communication device (KV) and the first frame application (RA1) for errors using the monitoring application (ÜA); and
- Restarting of the communication device (KV) if an error is detected in the hardware or the operating system (BS), or
Closing and restarting of the first frame application (RA1) if an error is detected in the first frame application (RA1).

2. Procedure as claimed in Claim 1, wherein the script initiates condition monitoring of the first frame application (RA1), wherein as part of condition monitoring, the first frame application (RA1) receives a current device status from each of the network users (FG1, FG2, FG3, GW) at regular intervals, and/or wherein, after the start of the first frame application (RA1), the script reads out a configuration file saved on the communication device (KV) and transmits the data read out to the first frame application (RA1) to execute the scan.

3. Procedure as claimed in Claim 1 or 2, wherein an operating unit (BE) is connected to the communication device (KV) by means of a second communication interface (KS2) of the communication device (KV) via a second communication network (KN2) or by means of the first communication interface (KS1), wherein a second frame application (RA2) is executed on the operating unit (BE).

4. Procedure as claimed in Claim 3, wherein the second frame application (RA2) is connected to the at least one network user (FG1, FG2, FG3, GW) via the communication application of the first frame application (RA1).

5. Procedure as claimed in Claim 4, wherein the operating unit (BE) operates, particularly configures, the first network user (FG1, FG2, FG3, GW).

6. Procedure as claimed in at least one of the Claims 3 to 5, wherein a mobile terminal is used as the operating unit (BE).

7. Procedure as claimed in Claim 1, wherein the monitoring application (ÜA) ends and restarts the first frame application (RA1) at regular intervals.

8. Procedure as claimed in at least one of the previous claims, wherein the network users (FG1, FG2, FG3, GW) determined after the scan of the first communication network (KN1) are saved as a project file.

9. Procedure as claimed in Claim 8, wherein, after the first frame application (RA1) is started, the script loads the saved project file into the first frame application (RA1).

10. Procedure as claimed in at least one of the previous claims, wherein, after the communication device (KV) is switched on or restarted, the operating system (BS) is only reset if a switching apparatus (SM) of the communication device (KV) with at least two possible states is in a first state.

11. Procedure as claimed in Claim 10, wherein the operating system (BS) is not reset after a restart if the switching apparatus (SM) of the communication device (KV) is in a second state, wherein, in this event, the script loads the saved project file into the first frame application (RA1) after the first frame application (RA1) is started.

12. Communication device (KV), comprising
at least a first communication interface (KS1) which is configured to communicate with at least a network user (FG1, FG2, FG3, GW),
wherein the communication device (KV) is designed to carry out the procedure as claimed in one of the Claims 1 to 11.

13. Communication device (KV) as claimed in Claim 12, wherein the first communication interface (KS1) is designed for connection to a first wired communication network (KN1), particularly a fieldbus used in automation engineering,
and/or wherein the communication device (KV) has a second communication interface (KS2), wherein said second communication interface is designed for connection to a second communication network (KN2), particularly wired or wireless,
and/or wherein the communication device (KV) has a third communication interface, wherein said third communication interface is designed for connection to a third communication network, particularly wired or wireless, and/or wherein the communication device (KV) can be connected to another network user (FG1, FG2, FG3, GW) by means of the first communication interface (KS1) or by means of the third communication interface, wherein the communication device (KV) is designed to execute operating commands of the additional network user (FG1, FG2, FG3, GW) and/or to transmit information to the other network user (FG1, FG2, FG3, GW).

## Revendications

1. Procédé destiné à établir une communication de réseau entre au moins un participant au réseau (FG1, FG2, FG3, GW), lequel participant est utilisé dans un premier réseau de communication (KN1), et un dispositif de communication (KV) dans une installation (AN) de la technique d'automatisation, le dispositif de communication (KV) présentant au moins une première interface de communication (KS1) pour la liaison avec l'au moins un participant au réseau (FG1, FG2, FG3, GW) par l'intermédiaire du premier réseau de communication (KN1), un système d'exploitation (BS) étant exécutable sur le dispositif de communication (KV),
une première application cadre (RA1), notamment une application cadre FDT, étant exécutable sur le système d'exploitation (BS), et une application de surveillance (ÜA) étant exécutable sur le système d'exploitation (BS) du dispositif de communication (KV), le dispositif de communication (KV) exécutant les étapes de procédé suivantes :
- Réinitialisation du système d'exploitation (BS) sur la base d'un fichier d'image situé sur le dispositif de communication (KV) après la mise sous tension ou le redémarrage du dispositif de communication (KV) ;
- Démarrage du système d'exploitation (BS) sur la base du fichier d'image ;
- Exécution d'un script, ce qui permet au script d'initier ou de contrôler les actions suivantes :
I. Démarrage de la première application cadre (RA1) et de l'application de surveillance (ÜA) ;
II. Intégration d'au moins une application de communication (KA) dans la première application cadre (RA1) ; et
III. Exécution d'un balayage du premier réseau de communication (KN1) au moyen de l'application de communication (KA) et détermination des informations d'identification de tous les participants au réseau (FG1, FG2, FG3, GW) intégrés dans le premier réseau de communication (KN1),
- Vérification si le système d'exploitation (BS), le hardware du dispositif de communication (KV) et la première application cadre (RA1) présentent des erreurs au moyen de l'application de surveillance (ÜA) ; et
- Redémarrage du dispositif de communication (KV) en cas d'erreur détectée sur le hardware ou le système d'exploitation (BS), ou
Arrêt et redémarrage de la première application cadre (RA1) en cas d'erreur détectée de la première application cadre (RA1).

2. Procédé selon la revendication 1, pour lequel le script initie une surveillance d'état de la première application cadre (RA1), la première application cadre (RA1) recevant à intervalles réguliers, dans le cadre de la surveillance d'état, un état actuel de l'appareil de chacun des participants au réseau (FG1, FG2, FG3, GW), et/ou procédé pour lequel le script, après le démarrage de la première application cadre (RA1), lit un fichier de configuration enregistré sur le dispositif de communication (KV) et transmet les données lues à la première application cadre (RA1) pour l'exécution du balayage.

3. Procédé selon la revendication 1 ou 2, pour lequel une unité de commande (BE) est reliée au dispositif de communication (KV) au moyen d'une deuxième interface de communication (KS2) du dispositif de communication (KV) via un deuxième réseau de communication (KN2) ou au moyen de la première interface de communication (KS1), une deuxième application cadre (RA2) étant exécutée sur l'unité de commande (BE).

4. Procédé selon la revendication 3, pour lequel la deuxième application cadre (RA2) est reliée à l'au moins un participant au réseau (FG1, FG2, FG3, GW) via l'application de communication de la première application cadre (RA1).

5. Procédé selon la revendication 4, pour lequel l'unité de commande (BE) commande, notamment paramètre, le premier participant au réseau (FG1, FG2, FG3, GW).

6. Procédé selon au moins l'une des revendications 3 à 5, pour lequel on utilise comme unité de commande (BE) un terminal mobile.

7. Procédé selon la revendication 1, pour lequel l'application de surveillance (ÜA) arrête et redémarre la première application cadre (RA1) à intervalles réguliers.

8. Procédé selon au moins l'une des revendications précédentes, pour lequel les participants au réseau (FG1, FG2, FG3, GW) déterminés après le balayage du premier réseau de communication (KN1) sont enregistrés sous forme de fichier de projet.

9. Procédé selon la revendication 8, pour lequel, après le démarrage de la première application cadre (RA1), le script charge le fichier de projet enregistré dans la première application cadre (RA1).

10. Procédé selon au moins l'une des revendications précédentes, pour lequel le système d'exploitation (BS) est réinitialisé après la mise sous tension ou le redémarrage du dispositif de communication (KV) uniquement si un moyen de commutation (SM) du dispositif de communication (KV) avec au moins deux états possibles se trouve dans un premier état.

11. Procédé selon la revendication 10, pour lequel le système d'exploitation (BS) n'est pas réinitialisé après le redémarrage lorsque le moyen de commutation (SM) du dispositif de communication (KV) est dans un deuxième état, auquel cas, après le démarrage de la première application cadre (RA1), le script charge le fichier de projet enregistré dans la première application cadre (RA1).

12. Dispositif de communication (KV), comprenant
au moins une première interface de communication (KS1) configurée pour communiquer avec au moins un participant au réseau (FG1, FG2, FG3, GW),
le dispositif de communication (KV) étant configuré pour mettre en œuvre le procédé selon l'une quelconque des revendications 1 à 11.

13. Dispositif de communication (KV) selon la revendication 12, pour lequel la première interface de communication (KS1) est conçue pour la liaison avec un premier réseau de communication filaire (KN1), notamment un bus de terrain de la technique d'automatisation,
et/ou dispositif de communication (KV) présentant une deuxième interface de communication (KS2), laquelle deuxième interface de communication est conçue pour la liaison avec un deuxième réseau de communication (KN2), notamment filaire ou sans fil,
et/ou le dispositif de communication (KV) présentant une troisième interface de communication, laquelle troisième interface de communication est conçue pour la liaison avec un troisième réseau de communication, notamment filaire ou sans fil, et/ou le dispositif de communication (KV) étant relié au moyen de la première interface de communication (KS1) ou au moyen de la troisième interface de communication à un autre participant au réseau (FG1, FG2, FG3, GW), le dispositif de communication (KV) étant conçu de manière à exécuter des instructions de commande de l'autre participant au réseau (FG1, FG2, FG3, GW) et/ou à transmettre des informations à l'autre participant au réseau (FG1, FG2, FG3, GW).
